# EUROPÄISCHE PATENTSCHRIFT

(11) **EP 3 282 600 B1**
(45) Veröffentlichungstag und Bekanntmachung des Hinweises auf die Patenterteilung: **06.10.2021**
(21) Anmeldenummer: 16183328.0
(22) Anmeldetag: 09.08.2016
(51) Int. Cl.: H04B 10/114

(54) **DATENÜBERTRAGUNGSSYSTEM**
DATA TRANSMISSION SYSTEM
SYSTEME DE TRANSMISSION DE DONNEES

(43) Veröffentlichungstag der Anmeldung: 14.02.2018
(73) Patentinhaber: Leuze electronic GmbH + Co KG, 73277 Owen/Teck (DE)
(72) Erfinder: Göhner, Matthias, 72581 Dettingen/Erms (DE); Wörner, Jörg, Pittsford, NY New York 14534 (US)
(74) Vertreter: Ruckh, Rainer Gerhard

(56) Entgegenhaltungen:
- EP-A1- 2 319 742
- DE-A1-102013 001 358
- US-A1- 2002 034 950
- US-A1- 2005 129 410
- "PARALLELE DATENUEBERTRAGUNG MIT LICHT. ÖEINSATZBEISPIELE AUS DEM INDUSTRIELLEN ALTAG", MESSEN UND PRUFEN, IVA INTERNATIONAL, MUNCHEN, DE, vol. 32, no. 5, 1 May 1996 (1996-05-01), pages 14-16, XP000592379, ISSN: 0937-3446

## Beschreibung

Die Erfindung betrifft ein Datenübertragungssystem.

Datenübertragungssysteme der in Rede stehenden Art werden im Bereich der Fabrikautomation, insbesondere bei sogenannten Monorail-Systemen, wie zum Beispiel Elektrohängebahnen und schienengeführten Fahrzeugen eingesetzt. Entlang der durch die Schienen oder dergleichen definierten Fahrbahnen der Fahrzeuge sind stationäre Einheiten wie Arbeitsgeräte und Be- und Entladestationen angeordnet. Zwischen diesen Einheiten und dem Fahrzeug werden Daten übertragen, wobei beispielsweise Statusinformationen vom Fahrzeug an die stationären Einheiten übertragen werden. Weiterhin werden Informationen von stationären Einheiten zum Fahrzeug übertragen, beispielsweise Daten über vom Fahrzeug aufzunehmenden Gegenständen.

Bekannte, hierfür eingesetzte Datenübertragungssysteme arbeiten mit Wellenleiter-Systemen, sogenannten Slotted Wave Guides. Derartige Systeme müssen sehr präzise gefertigt werden, um eine fehlerfreie Datenübertragung zu gewährleisten, was einen hohen konstruktiven Aufwand mit sich bringt. Weiterhin ist nachteilig, dass derartige Systeme nur bedingt für stärkere gekrümmte Bahnkurven eingesetzt werden können.

Weiterhin ist es bekannt, Datenübertragungssysteme in Form von Funksystemen einzusetzen. Derartige Funksysteme sind jedoch sehr störanfällig, insbesondere gegen Systeme, die mit ähnlichen Funkfrequenzen arbeiten.

Die DE 10 2013 001 358 A1 betrifft ein System für eine Anlage und Verfahren zum Betreiben eines Systems, aufweisend stationär angeordnete Sende-Empfangsmodule und ein Fahrzeug mit Sende-Empfangsmodul, wobei das jeweilige Sende-Empfangsmodul eine steuerbare Lichtquelle und einen Lichtsensor aufweist, so dass eine Datenübertragung zwischen dem Fahrzeug und den stationär angeordneten Modulen ausführbar ist.

In US 2005/129410 A1 ist ein optisches Kommunikationssystem für Fahrzeuge beschrieben. Bei diesem System erfolgt eine optische Datenübertragung zwischen einem Fahrzeug und einem stationären Host. Das Fahrzeug kann ein schienengebundenes Fahrzeug sein.

Weitere zum Stand der Technik gehörende Systeme zur Steuerung von fahrerlosen Transportmitteln sind aus "PARALLELE DATENÜBERTRAGUNG MIT LICHT. EINSATZBEISPIELE AUS DEM INDUSTRIELLEN ALLTAG" (MESSEN UND PRÜFEN, - 19960501 - IVA INTERNATIONAL, MÜNCHEN, DE) und der EP2319742 A1 bekannt.

Der Erfindung liegt die Aufgabe zugrunde, ein Datenübertragungssystem der eingangs genannten Art bereitzustellen, welches eine robuste und sichere Datenübertragung gewährleistet und gleichzeitig einfach und flexibel installiert werden kann.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Datenübertragungssystem mit wenigstens einem auf einem Fahrzeug angeordneten optischen Sensor. Das Fahrzeug ist entlang einer definierten Bahnkurve verfahrbar, wobei sich entlang dieser Bahnkurve wenigstens ein flexibles Trägerband mit einer Anzahl von in Abständen zueinander angeordneten optischen Sensorelementen erstreckt. Entsprechend der aktuellen Position des Fahrzeugs erfolgt eine optische Datenübertragung zwischen dem optischen Sensor und den optischen Sensorelementen des Trägerbands, die in einem Erfassungsbereich des optischen Sensors liegen.

Der Grundgedanke der Erfindung besteht somit darin, auf einem oder mehreren Trägerbändern, die entlang der Fahrbahn des Fahrzeugs verlegt sind, optische Sensorelemente als stationäre Elemente des Datenübertragungssystems vorzusehen. Dabei kann mit einem oder mehreren optischen Sensoren auf dem Fahrzeug als beweglichen Elementen des Datenübertragungssystems mit einem optischen Sensorelement auf dem Trägerband dann eine Datenübertragung erfolgen, wenn dieses optische Sensorelement innerhalb des Erfassungsbereichs des optischen Sensors ist, wobei diese Datenübertragung bidirektional oder auch unidirektional vom optischen Sensorelement zum optischen Sensor sein kann.

Ein wesentlicher Vorteil der Erfindung besteht darin, dass das Trägerband aufgrund seiner Flexibilität exakt an die Bahnkurve des Fahrzeugs angepasst werden kann und zwar insbesondere auch dann, wenn die Bahnkurve stark gekrümmt ist.

Weiterhin ist vorteilhaft, dass die optischen Sensorelemente in beliebiger Anzahl und in beliebigen Abständen zueinander angeordnet werden können, wodurch eine besonders gute Anpassung an unterschiedliche Applikationen möglich ist.

Ein weiterer Vorteil der Erfindung besteht darin, dass mit den optischen Sensorelementen und dem oder den optischen Sensoren eine robuste, fehlersichere optische Datenübertragung erfolgt, die gegenüber Störeinflüssen weitgehend unempfindlich ist. Eine robuste, fehlersichere Datenübertragung ist insbesondere dann gegeben, wenn der oder die optischen Sensoren und die optischen Sensorelemente die zu übermittelten Daten in Form von kodierter, insbesondere pulsförmigen optischen Signalen übermitteln, die unempfindlich gegen Fremdlichteinflüsse sind.

Gemäß einer vorteilhaften Ausgestaltung der Erfindung ist der optische Sensor auf einem entlang einer Schiene verfahrbaren Fahrzeug angeordnet. Das Trägerband ist in einem im Wesentlichen konstanten Abstand zur Schiene verlegt.

Das so ausgebildete Datenübertragungssystem kann somit in Applikationen im Bereich der Fabrikautomation, insbesondere im Bereich sogenannter Monorail-Systeme und spezifisch für Elektrohängebahnen eingesetzt werden.

Gemäß einer besonders zweckmäßigen Ausführungsform weist der wenigstens eine optische Sensor und jedes optische Sensorelement einen Sender in Form einer LED oder OLED auf.

Dementsprechend weist jedes optische Sensorelement einen Empfänger in Form einer Photodiode auf, wobei die Photodioden wie die Sender aus Halbleiterbauelementen oder organischen Bauelementen gebildet sein können.

Mit den so ausgebildeten Sendern und Empfängern werden kostengünstige, robuste und gleichzeitig kompakte optische Datenübertragungselemente erhalten, mit denen hohe Datenübertragungsraten im Bereich von 100 MB/s bis zum 1000 MB/s realisiert werden können.

Besonders vorteilhaft erfolgt zwischen den optischen Sensorelementen und dem oder den optischen Sensoren eine bidirektionale Datenübertragung.

Damit können von dem Trägerband zugeordneten stationären Einheiten, die von Be- und Entladestationen, Lagereinheiten zum Lagern von Gegenständen wie Regalsystemen gebildet sein können, Daten zu einem entlang der Bahnkurve fahrenden Fahrzeug und umgekehrt übertragen werden.

Das Fahrzeug kann dabei beispielsweise Statusdaten über seinen Betriebszustand ermitteln. Die stationären Einheiten können Informationen über an das Fahrzeug zu übergebende Gegenstände dem Fahrzeug übermitteln. Weiterhin können von den stationären Einheiten dem Fahrzeug Informationen zugesandt werden, die die Randbedingungen über die weitere Fahrt festlegen.

Derartige Nutzdaten können über die optischen Sensorelemente und dem oder den optischen Sensoren austauscht werden.

Vorteilhaft wird die optische Datenübertragung zwischen dem oder den optischen Sensoren und einem in dessen Erfassungsbereich liegenden optischen Sensorelementen von dem optischen Sensor aktiviert.

Damit ist gewährleistet, dass nur die optischen Sensorelemente des Trägerbands aktiv sind, die gerade im Erfassungsbereich liegen, wogegen die weiteren optischen Sensorelemente inaktiv sind. Damit wird die Aktivierung der optischen Sensorelemente optional an den Verfahrweg des Fahrzeugs angepasst und eine unnötige Aktivierung von optischen Sensorelementen, deren Signale nicht von optischen Sensoren des Fahrzeugs empfangen werden können, vermieden. Gegenüber einer dauerhaften Aktivierung aller optischen Sensorelemente des Trägerbands wird nicht nur eine erhebliche Energieeinsparung erzielt. Vielmehr wird dadurch auch die Lebensdauer der einzelnen optischen Sensorelemente erhöht.

Um eine exakte Positionierung des Fahrzeugs entlang der Bahnkurve zu erhalten, ist es notwendig, dass das Fahrzeug die entsprechenden aktuellen Positionsinformationen erhält. Erfindungsgemäß werden hierzu geeignete Komponenten auf dem Trägerband genutzt.

Gemäß einer ersten Variante werden von einem optischen Sensorelement an die optischen Sensoren eine Kennung und Nutzdaten übertragen, wobei in der Kennung die Position des optischen Sensorelements auf dem Trägerband kodiert ist.

Dabei ist jedem optischen Sensorelement ein Speicherelement zugeordnet, in welchem die Kennung dieses optischen Sensorelements abgespeichert ist.

In diesem Fall werden die Positionsinformationen in die von den optischen Sensorelementen gesandten Informationen eingebunden, so dass zur Übermittlung der Positionsinformationen keine weiteren Datenübertragungselemente benötigt werden.

Gemäß einer zweiten Variante werden von einem optischen Sensorelement nur Nutzdaten an den optischen Sensor übertragen. Jedem optischen Sensorelement ist eine Positionsmarke auf dem Trägerband zugeordnet, welche zur Positionsbestimmung des optischen Sensorelements von einem weiteren optischen Sensor gelesen wird.

Insbesondere sind die Positionsmarken von ein- oder zweidimensionalen Codes gebildet, welche von einem als Codeleser ausgebildeten optischen Sensor gelesen werden.

In diesem Fall brauchen keine elektrischen Speicherelemente zur Speicherung von Positionsinformationen auf dem Trägerband vorgesehen sein. Vielmehr sind die Positionsmarken als passive, mechanische Einheiten auf dem Trägerband ausreichend.

Gemäß einer vorteilhaften Ausführungsform werden von allen optischen Sensorelementen des Trägerbands dieselben Nutzdaten übertragen.

Dies wird vorteilhaft dadurch erreicht, dass an einem Ende des Trägerbands eine Anschalteinheit vorgesehen ist, von welcher Nutzdaten den optischen Sensorelementen des Trägerbands zugeführt sind.

Dabei erfolgt die Übertragung der Nutzdaten von der Anschalteinheit zu den optischen Sensorelementen über elektrische Leitungen auf dem Trägerband.

Damit können unabhängig von der Position des Fahrzeugs immer dieselben Daten von den optischen Sensorelementen des Trägerbands abgegriffen werden. Damit ist eine hohe Fehlersicherheit bei der Datenübertragung gewährleistet.

Gemäß einer zweckmäßigen Weiterbildung ist auf dem Trägerband wenigstens ein Zwischenverstärker vorgesehen, mittels dessen von der Anschalteinheit ausgesandte Signale verstärkt werden.

Bei langen Trägerbändern geht durch Verluste und externe Störungen die Information der über die elektrischen Leitungen übertragenen Nutzdaten teilweise verloren. Um diesem Effekt entgegenzuwirken, sind die Zwischenverstärker am Trägerband vorgesehen, mittels derer die Nutzdaten wieder aufbereitet werden.

Mit dem Trägerband können lineare aber auch komplexe Topologien realisiert werden. Insbesondere sind ein oder mehrere Trägerbänder vorgesehen, welche eine verzweigte oder vernetzte Struktur bilden.

Damit können die Trägerbänder entlang entsprechend verzweigter und vernetzter Bahnkurven geführt werden. Typische Beispiele hierfür sind flächig angeordnete Regallager, zwischen welchen verzweigte Bahnkurven verlaufen.

Die Erfindung wird im Folgenden anhand der Zeichnungen erläutert. Es zeigen:
- Figur 1:: Schematische Darstellung eines Ausführungsbeispiels des erfindungsgemäßen Datenübertragungssystems mit auf einem Trägerband angeordneten optischen Sensorelementen und einem auf einem Fahrzeug angeordneten optischen Sensor.
- Figur 2:: Einzeldarstellung des Trägerbands des Datenübertragungssystems gemäß Figur 1.
- Figur 3:: Erste Variante einer Anordnung von optischen Sensorelementen auf dem Trägerband und diesem zugeordneten optischen Sensoren.
- Figur 4:: Zweite Variante einer Anordnung von optischen Sensorelementen auf dem Trägerband und diesem zugeordneten optischen Sensoren.

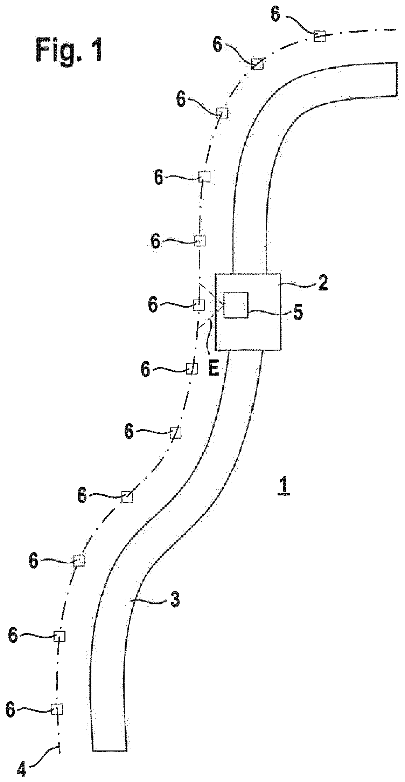

Figur 1 zeigt ein Ausführungsbeispiel des erfindungsgemäßen Datenübertragungssystems 1. Das Datenübertragungssystem 1 dient zur bidirektionalen Übertragung von Daten zwischen einem Fahrzeug 2 und nicht dargestellten stationären Einheiten wie Regalsystemen und dergleichen. Das Fahrzeug 2 ist auf einer Schiene 3 geführt und dementsprechend entlang einer Bahnkurve verfahrbar. Die Bahnkurve kann, wie in Figur 1 angedeutet, beliebig gekrümmt sein. Im vorliegenden Fall ist das Fahrzeug 2 entlang einer nicht verzweigten Bahnkurve verfahrbar. Generell können Fahrzeuge 2 auch entlang verzweigter Bahnkurven verfahren werden.

Entlang der Bahnkurve, das heißt der Fahrbahn des Fahrzeugs 2 ist ein flexibles Trägerband 4 verlegt und damit stationär angeordnet. Das Trägerband 4 besteht vorzugsweise aus Kunststoff. Das Trägerband 4 ist entlang der Bahnkurve verlegt, vorzugsweise in konstantem Abstand zur Schiene 3. Durch die Flexibilität des Trägerbands 4 kann dieses an beliebig gekrümmte Bahnkurven angepasst werden.

Das Datenübertragungssystem 1 umfasst wenigstens einen optischen Sensor 5 auf dem Fahrzeug 2 und eine Anzahl von auf dem Trägerband 4 angeordneten optischen Sensorelementen 6. Die jeweils identisch ausgebildeten optischen Sensorelemente 6 sind in vorgegebenen Abständen hintereinander auf dem Trägerband 4 angeordnet. Die optischen Sensorelemente 6 können in identischen Abständen oder in variierenden Abständen zueinander auf dem Trägerband 4 angeordnet sein und bilden dort eine lineare Anordnung.

Der optische Sensor 5 und jedes optische Sensorelement 6 weist ein optisches Sende-/ Empfangssystem auf. Das Grundprinzip des Datenübertragungssystems 1 ist derart, dass der optische Sensor 5 mit demjenigen optischen Sensorelement 6, das im Erfassungsbereich E des Sende-/ Empfangssystems liegt, bidirektional optische Daten austauschen kann.

Bei den zu übertragenden Daten handelt es sich insbesondere um Nutzdaten. Von optischen Sensoren 5 können Informationen über das Fahrzeug 2, wie zum Beispiel Statusinformationen von Fahrzeugkomponenten, wie Ladezustände von Batterien, an das optische Sensorelement 6 übertragen werden. Von dem optischen Sensorelement 6 können beispielsweise an den optischen Sensor 5 Informationen über Randbedingungen wie sich das Fahrzeug 2 bewegen soll, übertragen werden. Auch können Informationen über stationäre Einheiten im Bereich des optischen Sensorelements 6, beispielsweise über in ein Regalsystem einzulagernde Gegenstände oder von diesen zu entnehmenden Gegenständen an den optischen Sensor 5 und damit an das Fahrzeug 2 übermittelt werden.

Um die Lebensdauer der optischen Sensorelemente 6 auf den Trägerband 4 zu erhöhen, wird vom optischen Sensor 5 des Fahrzeugs 2 aus ein im Erfassungsbereich E des optischen Sensorelements 6 liegender optischer Sensor 5, vorzugsweise durch Aussenden von optischen Signalen, aktiviert, worauf das optische Sensorelement 6 die bidirektionale optische Datenübertragung mit dem optischen Sensor 5 startet. Alle anderen optischen Sensorelemente 6 bleiben inaktiv, wodurch der Stromverbrauch der optischen Sensorelemente 6 auf dem Trägerband 4 minimiert wird.

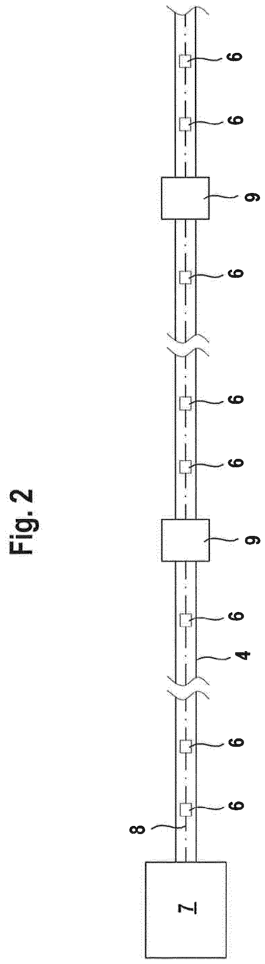

Figur 2 zeigt schematisch den Aufbau des Trägerbands 4. An einem Ende des Trägerbands 4 ist eine Anschalteinheit 7 vorgesehen, mittels derer zu übertragende Signale den einzelnen optischen Sensorelementen 6 über elektrische Leitungen 8 auf den Trägerband 4 zugeführt sind. Da bei der Führung entlang des Trägerbands 4 die elektrischen Signale infolge von Störeinflüssen verfälscht werden, sind in vorgegebenen Abständen auf dem Trägerband 4 Zwischenverstärker 9 vorgesehen, welche eine Repeaterfunktion aufweisen, das heißt mit dem Zwischenverstärker 9 erfolgt eine Wiederherstellung der elektrischen Signale.

Die elektrischen Signale werden von der Anschalteinheit 7 allen optischen Sensorelementen 6 in gleicher Weise zugeführt, so dass alle optischen Sensorelemente 6 dieselben Daten, insbesondere Nutzdaten übertragen.

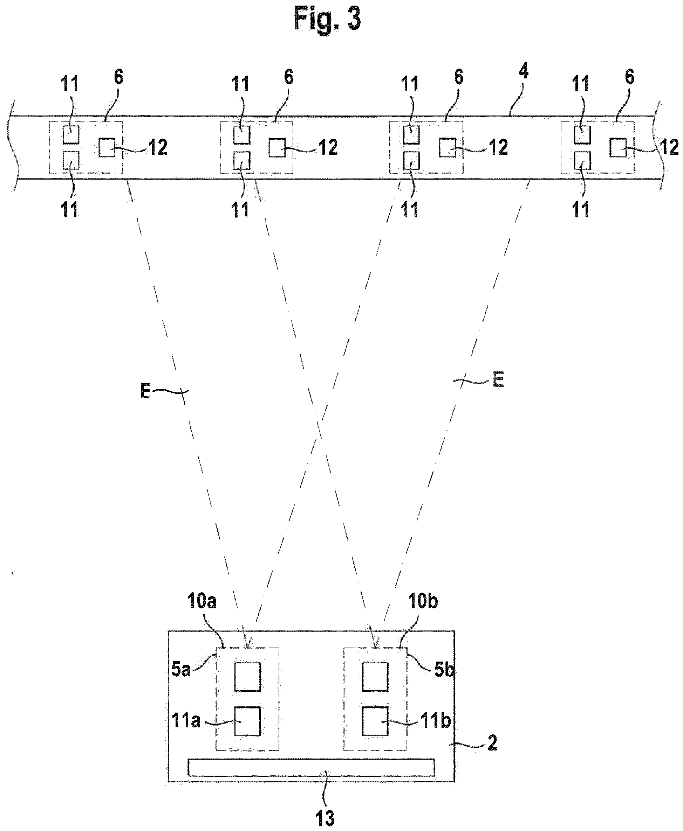

Figur 3 zeigt den Aufbau der auf dem Trägerband 4 angeordneten optischen Sensorelemente 6 und von zugeordneten optischen Sensoren 5 auf dem Fahrzeug 2.

Jedes optische Sensorelement 6 weist einen Lichtstrahlen emittierenden Sender 10 und einen Lichtstrahlen empfangenden Empfänger 11 als Sende-/ Empfangssystem auf. Der Sender 10 ist von einer OLED (organische Leuchtdiode) gebildet. Der Empfänger 11 ist von einer aus organischem Material bestehenden Photodiode gebildet. Alternativ können als Sender 10 eine LED und als Empfänger 11 eine Photodiode vorgesehen sein, die aus Halbleiterbauelementen bestehen.

Weiterhin weist jedes optische Sensorelement 6 einen Elektrobaustein auf, der im vorliegenden Fall von einem ASIC 12 gebildet ist.

Entsprechend sind auf dem Fahrzeug 2 zwei optische Sensoren 5 vorgesehen. Jeder optischer Sensor 5a, 5b weist einen Sender 10 a beziehungsweise 10b und einen Empfänger 11a beziehungsweise 11b auf, welche einen identischen Aufbau wie die Sender 10a, 10b und Empfänger 11a, 11b der optischen Sensorelemente 6 aufweist. Zur Steuerung der Sender 10a, 10b und zur Auswertung der Empfangssignale der optischen Sensoren 5a, 5b ist eine Rechnereinheit 13, die insbesondere von einem Mikroprozessor gebildet ist, vorgesehen. Generell können auch separate Rechnereinheiten 13 für die optischen Sensoren 5a, 5b vorgesehen sein.

Die optischen Sensoren 5a, 5b auf dem Fahrzeug 2 befinden sich in einem Abstand zueinander, der kleiner ist als die Abstände der optischen Sensorelemente 6 auf dem Trägerband 4.

Der Erfassungsbereich eines optischen Sensors 5a beziehungsweise 5b ist durch die Strahlcharakteristik dessen Senders 10a beziehungsweise 10b und den Sichtbereich dessen Empfängers 11a beziehungsweise 11b bestimmt. Durch den Einsatz zweier optischen Sensoren 5a, 5b kann der Erfassungsbereich vergrößert werden.

Die optische Datenübertragung zwischen den optischen Sensoren 5 und den in deren Erfassungsbereich E liegenden optischen Sensorelementen 6 erfolgt durch Aufprägen von entsprechenden Kodierungen auf die Lichtstrahlen die in Empfänger 11a, 11b der empfangenden Einheit ausgewertet werden.

Bei der Ausführungsform gemäß Figur 3 ist im ASIC 12 jedes optischen Sensorelements 6 dessen Position auf dem Trägerband 4 gespeichert. Wird ein optisches Sensorelement 6 von den optischen Sensoren 5 aus aktiviert, sendet dieses nicht nur Nutzdaten, die von der Anschalteinheit 7 übertragen werden, sondern auch den Positionswert, der im ASIC 12 gespeichert ist. Dadurch ist in dem optischen Sensor 5 und damit im Fahrzeug 2 stets die Position bekannt, anhand derer eine genaue Positionierung des Fahrzeugs 2 möglich ist.

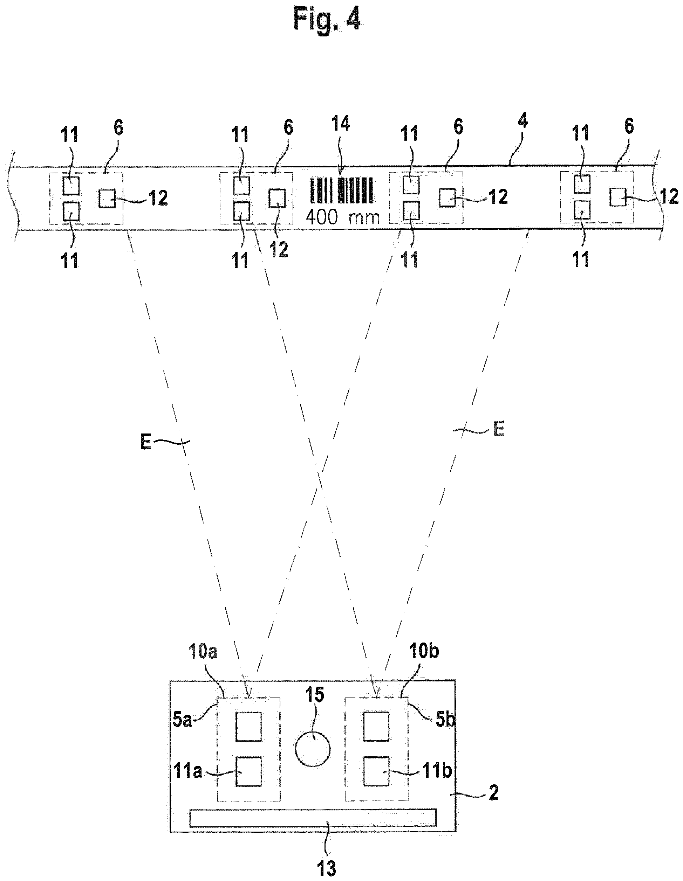

Die Ausführungsform des Datenübertragungssystems 1 gemäß Figur 4 entspricht im Wesentlichen der Ausführungsform gemäß Figur 3. Im Unterschied zur Ausführungsform gemäß Figur 3 sind auf dem Trägerband 4 außer den optischen Sensorelementen 6 auch diesem räumlich definiert zugeordnete Positionsmarken 14 vorgesehen. Die Positionsmarken 14 bilden allgemein Kontrastmuster, insbesondere Codes. Die Codes können als 2D-Codes oder, wie in Figur 4 dargestellt, als Barcodes ausgebildet sein, in welchen die Position der Positionsmarken 14 auf dem Trägerband 4 kodiert ist. Zudem ist unterhalb des Barcodes der Positionswert in Klarschrift angebracht. Diese Positionsmarken 14 ersetzen die in den ASICS 12 abgespeicherten Positionswerte.

Auf dem Fahrzeug 2 sind entsprechend der Ausführungsform von Figur 3 die beiden optischen Sensoren 5a, 5b vorgesehen. Zwischen diesen optischen Sensoren 5a, 5b ist ein Codeleser 15 vorgesehen, mit dem die Positionsmarken 14 gelesen werden. Im vorliegenden Fall weist der Codeleser 15 eine nicht dargestellte Kamera in Form einer CCD- oder CMOS-Matrix auf, mit der der Barcode und der Positionswert in Klartext gelesen werden können. Alternativ kann der Codeleser 15 als Barcodescanner ausgebildet sein.

In diesem Fall werden die optischen Sensoren 5a, 5b nur zur Übertragung von Nutzdaten, nicht jedoch von Positionswerten genutzt. Die Positionsinformationen sind im Fahrzeug 2 dadurch verfügbar, dass mit dem Codeleser 15 die Positionsmarken 14 auf dem Trägerband 4 gelesen werden.

### Bezugszeichenliste

- (1): Datenübertragungssystem
- (2): Fahrzeug
- (3): Schiene
- (4): Trägerband
- (5): optischer Sensor
- (5a, 5b): optischer Sensor
- (6): optisches Sensorelement
- (7): Anschalteinheit
- (8): elektrische Leitungen
- (9): Zwischenverstärker
- (10): Sender
- (10a, 10b): Sender
- (11): Empfänger
- (11a, 11b): Empfänger
- (12): ASIC
- (13): Rechnereinheit
- (14): Positionsmarke
- (15): Codeleser
- (E): Erfassungsbereich

## Patentansprüche

1. Datenübertragungssystem (1) mit wenigstens einem auf einem Fahrzeug (2) angeordneten optischen Sensor (5), wobei das Fahrzeug (2) entlang einer definierten Bahnkurve verfahrbar ist, wobei sich entlang dieser Bahnkurve wenigstens ein flexibles Trägerband (4) mit einer Anzahl von in Abständen zueinander angeordneten optischen Sensorelementen (6) erstreckt, wobei entsprechend der aktuellen Position des Fahrzeugs (2) eine optische Datenübertragung zwischen dem optischen Sensor (5) und den optischen Sensorelementen (6) des Trägerbands (4) erfolgt, die in einem Erfassungsbereich des optischen Sensors (5) liegen.

2. Datenübertragungssystem nach Anspruch 1, **dadurch gekennzeichnet, dass** der optische Sensor (5) auf einem entlang einer Schiene (3) verfahrbaren Fahrzeug (2) angeordnet ist, und dass das Trägerband (4) in einem konstanten Abstand zur Schiene (3) verlegt ist.

3. Datenübertragungssystem nach einem der Ansprüche 1 oder 2, **dadurch gekennzeichnet, dass** der wenigstens eine optische Sensor (5) und jedes optische Sensorelement (6) einen Sender (10) in Form einer LED oder OLED aufweist.

4. Datenübertragungssystem nach Anspruch 3, **dadurch gekennzeichnet, dass** jedes optische Sensorelement (6) einen Empfänger (11) in Form einer Photodiode aufweist.

5. Datenübertragungssystem nach einem der Ansprüche 1 bis 4, **dadurch gekennzeichnet, dass** zwischen den optischen Sensorelementen (6) und dem oder den optischen Sensoren (5) eine bidirektionale Datenübertragung erfolgt.

6. Datenübertragungssystem nach einem der Ansprüche 1 bis 5, **dadurch gekennzeichnet, dass** der optische Sensor (5) eingerichtet ist, die optische Datenübertragung zwischen dem optischen Sensor (5) und einem in dessen Erfassungsbereich liegenden optischen Sensorelement (6) zu aktivieren.

7. Datenübertragungssystem nach einem der Ansprüche 1 bis 6, **dadurch gekennzeichnet, dass** die optischen Sensorelemente (6) eingerichtet sind, an den optischen Sensor (5) eine Kennung und Nutzdaten zu übertragen, wobei in der Kennung die Position des optischen Sensorelements (6) auf dem Trägerband (4) kodiert ist.

8. Datenübertragungssystem nach Anspruch 7, **dadurch gekennzeichnet, dass** jedem optischen Sensorelement (6) ein Speicherelement zugeordnet ist, in welchem die Kennung dieses optischen Sensorelements (6) abgespeichert ist.

9. Datenübertragungssystem nach einem der Ansprüche 1 bis 8, **dadurch gekennzeichnet, dass** die optischen Sensorelemente (6) eingerichtet sind, nur Nutzdaten an den optischen Sensor (5) zu übertragen, und dass jedem optischen Sensorelement (6) eine Positionsmarke (14) auf dem Trägerband (4) zugeordnet ist, welche zur Positionsbestimmung des optischen Sensorelements (6) von einem weiteren optischen Sensor (5) gelesen wird.

10. Datenübertragungssystem nach Anspruch 9, **dadurch gekennzeichnet, dass** die Positionsmarken (14) von ein- oder zweidimensionalen Codes gebildet sind, welche von einem als Codeleser (15) ausgebildeten optischen Sensor (5) gelesen werden.

11. Datenübertragungssystem nach einem der Ansprüche 1 bis 10, **dadurch gekennzeichnet, dass** alle optischen Sensorelemente (6) des Trägerbands (4) dazu eingerichtet sind, dieselben Nutzdaten zu übertragen.

12. Datenübertragungssystem nach einem der Ansprüche 1 bis 11, **dadurch gekennzeichnet, dass** an einem Ende des Trägerbands (4) eine Anschalteinheit (7) vorgesehen ist, eingerichtet um den optischen Sensorelementen (6) des Trägerbands (4) Nutzdaten zuzuführen.

13. Datenübertragungssystem nach Anspruch 12, **dadurch gekennzeichnet, dass** die Übertragung der Nutzdaten von der Anschalteinheit (7) zu den optischen Sensorelementen (6) über elektrische Leitungen (8) auf dem Trägerband (4) erfolgt.

14. Datenübertragungssystem nach einem der Ansprüche 12 oder 13, **dadurch gekennzeichnet, dass** auf dem Trägerband (4) wenigstens ein Zwischenverstärker (9) vorgesehen ist, eingerichtet um von der Anschalteinheit (7) ausgesandte Signale zu verstärken.

15. Datenübertragungssystem nach einem der Ansprüche 1 bis 14, **dadurch gekennzeichnet, dass** ein oder mehrere Trägerbänder (4) vorgesehen sind, welche eine verzweigte oder vernetzte Struktur bilden.

## Claims

1. Data transmission system (1) with at least one optical sensor (5) arranged on a vehicle (2), wherein the vehicle (2) can be moved along a defined path curve, wherein at least one flexible carrier band (4) with a number of optical sensor elements (6) arranged at intervals from one another extends along this path curve, wherein optical data transmission takes place between the optical sensor (5) and the optical sensor elements (6) of the carrier band (4), which lie in a detection range of the optical sensor (5), in accordance with the current position of the vehicle (2).

2. The data transmission system according to claim 1, **characterised in that** the optical sensor (5) is arranged on a vehicle (2) which can travel along a rail (3), and **in that** the carrier tape (4) is laid at a constant distance from the rail (3).

3. The data transmission system according to one of claims 1 or 2, **characterised in that** the at least one optical sensor (5) and each optical sensor element (6) comprises a transmitter (10) in the form of an LED or OLED.

4. The data transmission system according to claim 3, **characterised in that** each optical sensor element (6) comprises a receiver (11) in the form of a photodiode.

5. The data transmission system according to any one of claims 1 to 4, **characterised in that** between the optical sensor elements (6) and the or the optical sensors (5) a bidirectional data transmission takes place.

6. The data transmission system according to one of claims 1 to 5, **characterised in that** the optical sensor (5) is set up to activate the optical data transmission between the optical sensor (5) and an optical sensor element (6) located in its detection range.

7. The data transmission system according to one of claims 1 to 6, **characterised in that** the optical sensor elements (6) are set up to transmit an identifier and useful data to the optical sensor (5), the position of the optical sensor element (6) on the carrier tape (4) being encoded in the identifier.

8. The data transmission system according to claim 7, **characterised in that** each optical sensor element (6) is assigned a memory element in which the identification of this optical sensor element (6) is stored.

9. The data transmission system according to one of claims 1 to 8, **characterised in that** the optical sensor elements (6) are set up to transmit only useful data to the optical sensor (5) and **in that** each optical sensor element (6) is assigned a position marker (14) on the carrier tape (4) which is read by a further optical sensor (5) in order to determine the position of the optical sensor element (6).

10. The data transmission system according to claim 9, **characterised in that** the position marks (14) are formed by one- or two-dimensional codes which are read by an optical sensor (5) designed as a code reader (15).

11. The data transmission system according to any one of claims 1 to 10, **characterised in that** all optical sensor elements (6) of the carrier tape (4) are set up to transmit the same useful data.

12. The data transmission system according to one of the claims 1 to 11, **characterised in that** a connection unit (7) is provided at one end of the carrier tape (4) and is set up to supply useful data to the optical sensor elements (6) of the carrier tape (4).

13. The data transmission system according to claim 12, **characterised in that** the transmission of the useful data from the connection unit (7) to the optical sensor elements (6) takes place via electrical lines (8) on the carrier tape (4).

14. The data transmission system according to one of claims 12 or 13, **characterised in that** at least one repeater (9) is provided on the carrier tape (4), arranged to amplify signals emitted by the interface unit (7).

15. The data transmission system according to any one of claims 1 to 14, **characterised in that** one or more carrier tapes (4) are provided which form a branched or cross-linked structure.

## Revendications

1. Système de transmission de données (1) avec au moins un capteur optique (5) disposé sur un véhicule (2), dans lequel le véhicule (2) peut être déplacé le long d'une courbe de trajectoire définie, dans lequel au moins une bande porteuse flexible (4) avec un certain nombre d'éléments de capteurs optiques (6) disposés à distance les uns des autres s'étend le long de cette courbe de trajectoire, la transmission optique de données s'effectue entre le capteur optique (5) et les éléments de capteur optique (6) de la bande porteuse (4) qui se trouvent dans une zone de détection du capteur optique (5), en fonction de la position actuelle du véhicule (2).

2. Système de transmission de données selon la revendication 1, **caractérisé en ce que** le capteur optique (5) est disposé sur un véhicule (2) qui peut se déplacer le long d'un rail (3), et **en ce que** la bande porteuse (4) est posée à une distance constante du rail (3).

3. Système de transmission de données selon l'une des revendications 1 ou 2, **caractérisé en ce que** l'au moins un capteur optique (5) et chaque élément de capteur optique (6) comprend un émetteur (10) sous la forme d'une LED ou OLED.

4. Système de transmission de données selon la revendication 3, **caractérisé en ce que** chaque élément capteur optique (6) comprend un récepteur (11) sous la forme d'une photodiode.

5. Système de transmission de données selon l'une quelconque des revendications 1 à 4, **caractérisé en ce qu'**entre les éléments capteurs optiques (6) et le ou les capteurs optiques (5), une transmission de données bidirectionnelle se produit.

6. Système de transmission de données selon l'une des revendications 1 à 5, **caractérisé en ce que** le capteur optique (5) est configuré pour activer la transmission optique de données entre le capteur optique (5) et un élément capteur optique (6) situé dans sa zone de détection.

7. Système de transmission de données selon l'une des revendications 1 à 6, **caractérisé en ce que** les éléments capteurs optiques (6) sont configurés pour transmettre un identifiant et des données utiles au capteur optique (5), la position de l'élément capteur optique (6) sur la bande porteuse (4) étant codée dans l'identifiant.

8. Système de transmission de données selon la revendication 7, **caractérisé en ce qu'**à chaque élément capteur optique (6) est associé un élément de mémoire dans lequel l'identifiant de cet élément capteur optique (6) est mémorisé.

9. Système de transmission de données selon l'une des revendications 1 à 8, **caractérisé en ce que** les éléments capteurs optiques (6) sont configurés pour ne transmettre que des données utiles au capteur optique (5) et **en ce qu'**à chaque élément capteur optique (6) est associé un marqueur de position (14) sur la bande porteuse (4) qui est lu par un autre capteur optique (5) pour déterminer la position de l'élément capteur optique (6).

10. Système de transmission de données selon la revendication 9, **caractérisé en ce que** les repères de position (14) sont formés par des codes uni- ou bidimensionnels qui sont lus par un capteur optique (5) conçu comme un lecteur de code (15).

11. Système de transmission de données selon l'une quelconque des revendications 1 à 10, **caractérisé en ce que** tous les éléments capteurs optiques (6) de la bande porteuse (4) sont configurés pour transmettre les mêmes données utiles.

12. Système de transmission de données selon l'une des revendications 1 à 11, **caractérisé en ce qu'**une unité de connexion (7) est prévue à une extrémité de la bande porteuse (4) et est configurée pour fournir des données utiles aux éléments capteurs optiques (6) de la bande porteuse (4).

13. Système de transmission de données selon la revendication 12, **caractérisé en ce que** la transmission des données utiles de l'unité de connexion (7) aux éléments capteurs optiques (6) s'effectue par l'intermédiaire de lignes électriques (8) sur la bande porteuse (4).

14. Système de transmission de données selon l'une des revendications 12 ou 13, **caractérisé en ce qu'**au moins un répéteur (9) est prévu sur la bande porteuse (4), agencé pour amplifier les signaux émis par l'unité de connexion (7).

15. Système de transmission de données selon l'une quelconque des revendications 1 à 14, **caractérisé en ce qu'**il est prévu un ou plusieurs bandes porteuses (4) qui forment une structure ramifiée ou réticulée.
